(19)

Europäisches
Patentamt
European
Patent Office
Office européen
des brevets

(11)  **EP 3 858 594 A1**

(12)  **EUROPEAN PATENT APPLICATION**

(43) Date of publication:
04.08.2021  Bulletin 2021/31

(21) Application number: 20154773.4

(22) Date of filing: 31.01.2020

(51) Int Cl.:
*B32B 3/12* (2006.01)    *B32B 5/26* (2006.01)
*B32B 7/027* (2019.01)   *B32B 9/00* (2006.01)
*B32B 9/02* (2006.01)    *B32B 9/06* (2006.01)
*C09K 5/06* (2006.01)    *F28D 20/02* (2006.01)
*B60R 13/00* (2006.01)   *B60R 13/08* (2006.01)
*B60R 13/02* (2006.01)   *B60R 13/01* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Benecke-Kaliko AG
30419 Hannover (DE)**

(72) Inventors:
• **Sharma, Neelima Raj
30419 Hannover (DE)**
• **Hebbale, Veeresh Ravichand
30419 Hannover (DE)**

(74) Representative: **Continental Corporation
c/o Continental AG
Intellectual Property
Postfach 169
30001 Hannover (DE)**

(54)  **LINING MATERIALS FOR THERMOREGULATION**

(57)     The invention describes a lining material comprising in this order a) a cover layer comprising one or more polymer sheets, b) an intermediate layer comprising at least one phase change material, and c) a bottom layer having a honeycomb structure, and articles or parts provided with such lining material.

The lining material is suitable for thermoregulation, in particular in automotive interiors.

EP 3 858 594 A1

**Description**

The invention relates to a multilayer lining material for thermoregulation including a phase change material and an article or part provided with the lining material, especially an automotive article or automotive part provided with the lining material.

On very hot days, when the cars are parked in the parking facing the sun or even during the driving, the drivers feel severe thermal discomfort just after entering an automobile's cabin. Therefore, a huge amount of cooling energy must be used to lower down the temperature to the comfort condition by the air conditioner.

On the other hand, on very cold days the interior temperature of a car gets very cold so that a lot of energy from the air conditioner is required to achieve a pleasant temperature.

The following drawbacks and problems caused by extreme temperatures in vehicles can be mentioned:

- Interior temperature of a car getting very high (overheating) when outside temperature is hot, causing

  • Fatalities in children due to hyperthermia
  • Discomfort in seating
  • Discomfort and distraction in driving when steering wheel gets hot
  • Heat related problems such as heat boils, rashes, etc.

- Interior temperature of a car getting very cold when outside temperature is cold causing

  • Hypothermia, Frostbites
  • Chilblains
  • Fogging of windshield, windows and rear-view mirrors
  • Existing solution of block heaters drain the battery and enhance the cold-start problem that increases vehicle emissions

- Temperature dependence of comfort in case of seat materials based on weather conditions.
- No control on vehicle interior's surface material temperature.

While air conditioners can alleviate these drawbacks and problems in part, a large amount of energy is necessary and the consumption thereof can create further problems. In recent years, so called phase change materials have attracted attention as a means to maintain appropriate thermal conditions in automotive.

A phase change material (PCM) is a substance with a high heat of fusion which by melting and solidifying at a certain temperature, is capable of storing and releasing large amounts of energy. Heat is absorbed or released when the material changes from solid to liquid and vice versa; thus, PCMs are classified as latent heat storage (LHS) units. Initially, solid-liquid PCMs behave like sensible heat storage (SHS) materials; their temperature rises as they absorb heat. Unlike conventional SHS materials, however, when PCMs reach the temperature at which they change phase (their melting temperature) they absorb large amounts of heat at an almost constant temperature. The PCM continues to absorb heat without a significant rise in temperature until all the material is transformed to the liquid phase. When the ambient temperature around a liquid material falls, the PCM solidifies, releasing its stored latent heat. A large number of PCMs are available in any required temperature range from -5 up to 190 °C.

WO 2002/083440 A2 relates to a thermal control method for an automotive interior in which at least a headliner, seats, and an instrument panel are provided, wherein the method comprises: incorporating a first phase change material in the headliner, incorporating a second phase change material in the seats, and incorporating a third phase change material in the instrument panel. The phase change material is preferably encapsulated in a polymeric or elastomeric compound material and serves to control the temperature within the automotive interior.

US 5950710 describes an overheat regulating system for a passenger compartment of a vehicle comprising at least one thermal conductor containing a phase-change working substance for cooling the overheated passenger compartment automatically without consuming any man-made power when the vehicle is parked outdoor under direct sunshine.

US 8623538 B2 relates to a microencapsulated phase change material used in conjunction with a cooling fluid as part of a thermal management system for an automotive battery pack assembly. The microencapsulated phase change material is made to have enhanced latent heat transfer properties at lower temperatures and higher temperatures such that a vehicle employing such an automotive battery pack assembly is more resistant to environments where freezing and overheating might otherwise be prevalent.

While the use of PCMs in automotive systems is known, there is still a need of improvement in view of the drawbacks and problems discussed above.

The object of the present invention is to overcome the drawbacks and problems caused by extreme temperatures as discussed above. Specifically, the object of the present invention is to provide linings with excellent thermal isolation in combination with reduced weight and increased mechanical stability, in particular for automotive applications.

The problem is solved by a surface material including phase change material that changes its phase when temperature thresholds are exceeded enabling safety and comfort against extreme temperatures.

Accordingly, the invention relates to a lining material comprising in this order

a) a cover layer comprising one or more polymer sheets,
b) an intermediate layer comprising at least one phase change material, and
c) a bottom layer having a honeycomb structure.

The invention also relates to an article or a part, which is provided with the lining material of the invention.

The invention provides inter alia the following advantages:

- The solution enables faster heat dissipation rate making the surface to cool down.
- It allows for a cosier and warmer surface experience by regulating the heat flow during colder climates.
- It is eco-friendly
- It works at all times
- No change in haptics are necessary
- It is not battery powered
- It is completely extendible and scalable to any vehicle and any part.
- Does not drain the battery causing more cold starts and emissions.
- It is automotive grade
- Substantial step towards oil independence
- It is a light weight solution
- It is a low cost solution
- Improved fire resistance
- Improved mechanical strength

The invention is explained in detail in the following.

The lining material of the invention is a multilayer lining material. In one embodiment, the lining material consists of a) the cover layer,
b) the intermediate layer, and c) the bottom layer, and optionally additionally one or two adhesive layers therebetween. The lining material of the invention comprises a) a cover layer comprising one or more polymer sheets. If the cover layer comprises more than one polymer sheet, the polymer sheets can be made from the same or different polymer materials.

The one or more polymer sheets may be for instance sheets made of PVC, natural leather, artificial or synthetic leather, PVC, nylon, polyester, vinyl polymer, faux or a combination of said sheets. The one or more polymer sheets may be all PVC sheets. In a preferred embodiment, the cover layer comprises one or more PVC sheets. As known by the skilled person, PVC refers to polyvinyl chloride.

In a preferred embodiment, the cover layer is a synthetic leather layer or synthetic leather, respectively, more preferably a synthetic leather PVC layer (synthetic leather PVC). Thus, the cover layer, which is the visible surface layer, when the lining material is attached to an article or part, can serve as a decorative surface layer.

The cover layer may include a coating on top of the one or more polymer sheets, in particular synthetic leather, preferably on top of the one or more PVC sheets.

A suitable cover layer which is synthetic leather such as leather PVC is commercially available as decorative surface material, further instance Acella® from Continental or a part thereof.

The lining material of the invention further comprises b) an intermediate layer comprising at least one phase change material, which is arranged between the cover layer and the bottom layer of the lining material. The intermediate layer comprises a phase change material or a mixture of two or more phase change materials.

The phase changing material serves for the regulation of the temperature. Phase change materials are known to the skilled person and have been explained above. Reference is made to the above explanation / definition of phase change materials in this regard. The phase changing material is generally a solid-liquid phase changing material. Suitable forms of phase change material are commercially available, e.g. savE® OM32.

Examples for suitable phase change materials are hydrocarbons, in particular paraffins ($C_nH_{2n+2}$), paraffin wax, malic acid, fatty acids, such as lauric acid, and palmitic acid, esters, lipids, polyethylene glycol and sugar alcohols, and other similar organic compounds, inorganic salt hydrates and mixture thereof. Suitable paraffins or paraffin waxes may have e.g. 14 to 34 carbon atoms. The phase change material is preferably selected from paraffins or paraffin waxes. Suitable examples are heneicosane (melting temperature 40.5 °C, crystallization temperature 35.9 °C), eicosane (melting temperature 36.1 °C, crystallization temperature 30.6 °C), nonadecane (melting temperature 32.1 °C, crystallization temperature 26.4 °C), octadecane (melting temperature 28.2 °C, crystallization temperature 25.4 °C) or mixtures thereof.

The phase change material is generally incorporated or encapsulated in a polymeric or elastomeric matrix of the intermediate layer, to contain in the liquid state. In a preferred embodiment, the phase change material is microencapsulated. Micro-encapsulation allows the material to remain solid, in the form of small bubbles, when the PCM core has melted. Hence, the phase change material is preferably encapsulated or microencapsulated phase change material. It is also possible to incorporate the encapsulated or in particular the microencapsulated phase change material in a polymeric or elastomeric matrix of the intermediate layer.

As material for encapsulating or microencapsulating the phase change material and/or as material for the polymeric or elastomeric matrix constituting the intermediate layer polymeric or elastomeric compounds may be used. Examples for a suitable polymeric or elastomeric compound are polyolefin, polyethylene, polyurethane, silicon, polyacrylate, polymethacrylate or mixtures thereof.

In an alternative embodiment, the at least one phase change material is placed in a pouch. It goes without saying that the pouch is sealed to avoid leaking of the phase change material in liquid form. The pouch can be of any material wherein plastic pouches are preferred. The size of the pouches can be selected as desired. The pouch filled with the at least one phase change material can be arranged between the cover layer and the bottom layer. The pouches can be fixed to the cover layer and/or the bottom layer, e.g. by an adhesive, if appropriate. In a suitable embodiment, a number of pouches filled with the at least one phase change material are arranged between the cover layer and the bottom layer in a linear fashion.

The melting point of the PCM can be varied based on the requirement and the PCM chosen. A large number of PCMs are available in any required temperature range from -5 up to 190 °C. Suitable PCM may have, for instance, a melting temperature in the range of 5 to 50 °C, preferably 15 to 45 °C, more preferably 20 to 35 °C. Within the human comfort range between 20-30 °C, some PCMs are very effective such as savE®OM32 which belongs to the paraffin type. But any PCM can be chosen with adequate melting point based on how hot/cold the environment are and how much thermoregulation is needed.

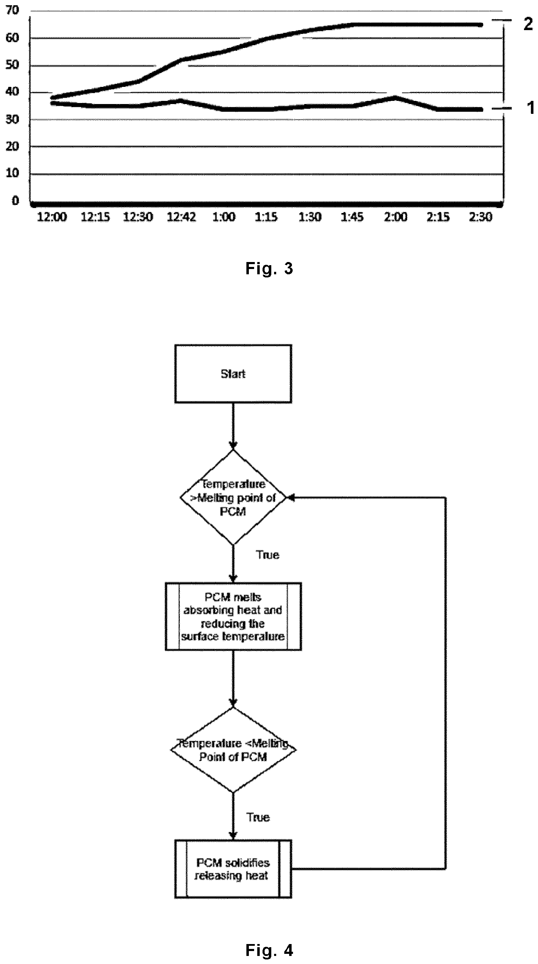

As already indicated above and illustrated in Fig. 4, the phase change material possesses the ability to change its physical state within a certain temperature range. When the melting temperature of a phase change material in a heating process is obtained, the phase change from the solid state to the liquid state occurs. During this melting process, the phase change material absorbs and stores a large amount of latent heat. The temperature of the phase change material remains nearly constant during the entire process. In a cooling process, the heat stored by the phase change material is released into the environment in a certain temperature range and a reverse phase change from the liquid state to the solid state takes place.

The lining material of the invention further comprises c) a bottom layer having a honeycomb structure. The bottom layer having a honeycomb structure acts as additional temperature regulator and helps to minimize the weight and cost.

Honeycomb structures are natural or man-made structures that have the geometry of a honeycomb to allow the minimization of the amount of used material to reach minimal weight and minimal material cost. The geometry of honeycomb structures can vary widely but the common feature of all such structures is an array of hollow cells formed between thin vertical walls. The cells are often columnar and hexagonal in shape. Other cells shapes of honeycomb structures are square, pentagonal, tetrahedral, pyramidal etc. A honeycomb shaped structure provides a material with minimal density and relative high out-of-plane compression properties and out-of-plane shear properties.

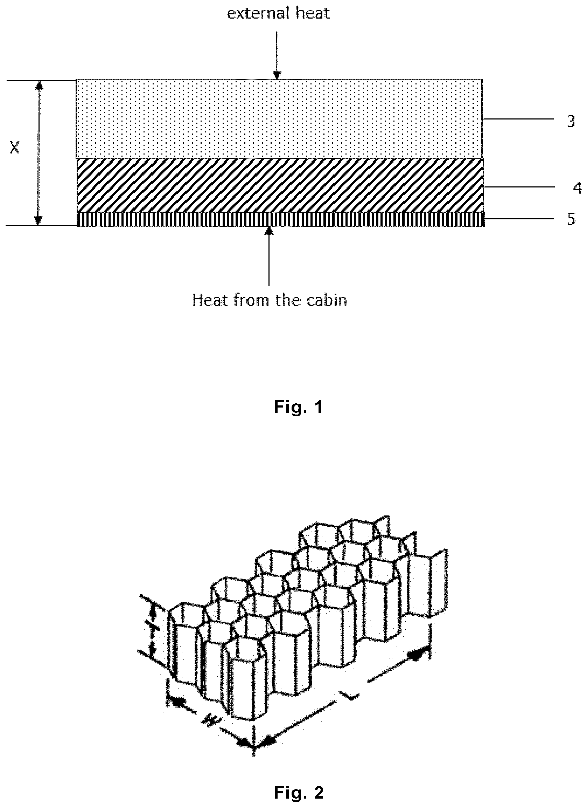

The honeycomb structure has a length direction (L), a width direction (W) and a height direction (T) as outlined in Fig. 2. The height direction T corresponds to the axis direction of the honeycomb cells parallel to the cells walls. The two sides of the honeycomb structure perpendicular to the height direction T are designated here as face sides of the honeycomb structure.

The honeycomb structure can be arranged in the lining material such that the height direction T of the honeycomb structure is perpendicular or parallel to the layers of the lining material, wherein it is preferred that the honeycomb structure is perpendicular to the height direction T.

The bottom layer may have a face sheet located one of the face sides of the honeycomb structure. In a preferred embodiment, the bottom layer has two face sheets located on both face sides of the honeycomb structure. The face sheets can provide improved strength. The face sheets may be made from e.g. woven fiberglass cloth or fabric or paper or plastics such as polypropylene plastic sheet.

The honeycomb structure of the bottom layer is preferaby made of polymer material, polyester fabric, polyurethane, aramid, carbon fibers, foam, such as polymer foam, Kevlar fibers, paper, or paperboard, e.g. honeycombs made from Nomex® material. Nomex® honeycombs are manufactured from Nomex paper - a type of paper or paper based on Kevlar fibers. In a preferred embodiment, the polymeric material of the honeycomb structure is selected from at least one of polyurethane and aramid.

The honeycomb structure may be filled with silica aerogel or a resin foam such as a phenolic resin foam, preferably with a silica aerogel. The material is filled in the hollow cells of the honeycomb structure.

The basic values determined in establishing the thermal conductivity of a material or combination of materials used in a honeycomb structure can be defined as follows:

k thermal conductivity: The time rate of heat flow through a homogeneous material or one of uniform structure under steady state conditions, expressed in British thermal units per hour per square foot per inch of thickness per degree difference in temperature between surface of the material.

U over-all coefficient of heat transmission, air to air: The time rate of heat flow expressed in British thermal units per hour per square foot per degree difference in temperature.

The U value for a construction is found from the relation

$$U = \frac{1}{\sum \frac{t}{k}}$$

where the values of k are for the several constituents of the wall and t the thickness of these constituents. The larger the honeycomb wall thickness, the smaller the temperature difference; the temperature difference increases with the honeycomb side length, panel thickness and honeycomb core thickness.

The conductivity value of the core is affected by: cell size, density, resin content, construction, and type of material. Thermal insulation was significantly affected by the type of construction. A certain k value was obtained with cross-corrugated (XN) or the parallel-corrugated (RN) structures having flutes perpendicular to facings. By placing these same structures in the test so that flutes were parallel instead of perpendicular to the plates, the k value was reduced significantly (approximately by 20%). An improvement in the insulation value of the sandwich construction can be realized by filling the honeycomb core with insulation or a foamed-in-place resin. A reduction in the k value of a corrugated was obtained when a phenolic resin was foamed into the core. A slightly lower value was obtained through the use of fill insulation. Foaming of resins into honeycomb appears very promising as a means of improving thermal insulation and fire resistance. The XN core, due to its open construction, can be filled after it is made.

In a preferred embodiment, the thickness of the cover layer, in particular leather layer, represents 3 to 15% of the total thickness of the lining material, the thickness of the intermediate layer represents 25 to 45% of the total thickness of the lining material, and the thickness of the bottom layer represents 45 to 65% of the total thickness of the lining material.

In a particular preferred embodiment, the thickness of the cover layer, in particular leather layer, represents 5 to 10% of the total thickness of the lining material, the thickness of the intermediate layer represents 30 to 40% of the total thickness of the lining material, and the thickness of the bottom layer represents 50 to 60% of the total thickness of the lining material. The most preferred thickness in the layers should be: 0.1X (cover layer, in particular leather layer) + 0.4X (intermediate PCM layer) + 0.5X (bottom layer / honeycomb layer) wherein X represents the total thickness of the lining material.

The total thickness of the lining material may vary in wide ranges and depend on the respective application. The total thickness of the lining material may be e.g. in the range of from 0.1 mm to 5 mm, preferably 0.5 mm to 1 mm.

The invention also relates to an article or a part which is provided with the lining material of the invention as discussed above. The lining is fixed to the article or part in such a way that the bottom layer of the lining material faces to the surface of the article or part and the cover layer of the lining material forms the top surface of the lined article or part, i.e. represents the visible surface.

The lining material can be fixed to the article or part, e.g. by means of an adhesive.

The articles or parts can be e.g. articles or parts in the field of vehicles, batteries, cold storages, packaging, healthcare, interiors of hotels, spas, restaurants, cruises, gyms, homes, seating solutions in all fields such as offices, colleges, and architectural construction. Examples of specific articles or parts are seats, floor mats, wall coats, and chairs.

In a preferred embodiment the article or part is article or part of a vehicle, in particular an automotive article or automotive part, preferably an article or part in a vehicle passenger compartment, in particular an automotive passenger compartment.

In a preferred embodiment, the liner material of the invention is mounted in an automotive passenger compartment, e.g. in the headliner of the automotive passenger compartment, such that the liner material mounted includes a total weight of 3 to 5 kg phase change material.

In a preferred embodiment, the article or part is selected from a car seat, a headliner, an instrument panel, a door panel, a flooring, or a luggage compartment, in particular from a vehicle or automobile.

The invention will be further illustrated in the light of the following examples and the following drawings:

Fig. 1    shows a cross-section view of the lining material according to the invention;

Fig. 2    shows a perspective partial view of the honeycomb structure;

Fig. 3    shows a temperature development in a car interior provided with the lining material of the invention and in the same car provided with conventional lining;

Fig. 4    shows a flowchart of the behavior of a phase change material below and above the melting temperature of the PCM.

Fig. 5    shows the relationship between temperature difference and honeycomb wall thickness;

Fig. 6    shows the relationship between temperature difference and length of honeycomb side;

Fig. 7    shows the relationship between temperature difference and height of honeycomb side;

Fig. 8    shows the relationship between temperature difference and thickness of panel.

Fig. 1 shows a cross-section view of a lining material according to the invention. The lining material includes, in this order, a bottom layer 3 having honeycomb structure, an intermediate layer 4 comprising PCM, and a cover layer 5, which is preferably natural or synthetic leather. The lining material or surface material can be attached, for instance, to an article or a part of a car, e.g. to an instrument cluster, a headliner or a door of the car, e.g. by means of an adhesive. The liner material is attached to the article or part so that the bottom layer 3 faces to the article or part, and the cover layer 5 represents the visible or decorative surface. The surface of the part or article on which the liner material is attached can be e.g. a metal surface. With X being the total thickness of lining material, the relative thickness of the layer may be e.g. as follows:

- bottom layer 3 having honeycomb structure: 0.45-0.65X, preferably 0.5-0.6X, e.g. 0.5X
- intermediate layer 4 including PCM: 0.25-0.45X, preferably 0.3-0.4X, e.g..0.4X and
- cover layer 5, preferably leather layer: 0.03-0.15X, preferably 0.05-0.1X, e.g. 0.1X,

Fig. 2 shows a perspective partial view of a honeycomb structure showing length direction (L), width direction (W) and height direction (T) of the structure.

Fig. 3 shows a comparison of the temperature development in a car interior provided with the lining material of the invention (curve 1) compared to the temperature development in the same car but provided with conventional lining (curve 2). The y-axis represents the temperature in °C. The x-axis represents the time. The comparison shows that within about 2 ½ hours the lining material of the invention achieves an interior temperature which is about 31 °C lower than that in the interior with conventional lining.

Example 1

In the present examples paraffins are used as phase change material. These are crystalline alkyl hydrocarbons with different chain lengths. Characteristics of suitable paraffine are summarized in Table 1.

TABLE 1

| Thermal characteristics of selected paraffine | | | |
|---|---|---|---|
| Paraffin | Melting temperature, °C. | Crystallization temperature, °C. | Latent heat storage capacity, J/g |
| Heneicosane | 40.5 | 35.9 | 213 |
| Eicosane | 36.1 | 30.6 | 247 |
| Nonadecane | 32.1 | 26.4 | 222 |
| Octadecane | 28.2 | 25.4 | 244 |

Compared to other phase change materials, paraffins possess very high heat storage capacities. Furthermore, paraffins can be mixed in order to realize desired temperature ranges in which the phase change will take place. Paraffins are nontoxic, noncorrosive and nonhygroscopic. The thermal behavior of the paraffin remains stable also under permanent use. Paraffins are byproducts of petroleum refining and therefore inexpensive. A disadvantage of the paraffins is their low resistance to ignition. But this problem can be solved by adding fire retardants.

In the following, a suitable amount of phase change material (PCM) to be used in the interior of an exemplary car cabin for appropriate thermoregulation is calculated. The commercial PCM product named savE® OM32 is used for all calculations. However these calculations will vary by a small amount depending upon the PCM chosen. The PCM placed in pouches is used for the intermediate layer.

Calculation part: Total weight of PCM CAR LINING

**Car cabin volume:**

Length =136cm=1.36m Width = 92cm=0.92m Height = 106cm=1.06m Volume=1.326m$^3$
Inside temperature T1 =45°C Atmospheric temperature T2=30°C ΔT= 15°C

1. Heat transfer from top steel surface.
U steel =1.2w/m$^2$
Q=U.A. dt
Area=L*B=1.36 x 0.92 =1.25 m$^2$
dt =15°C
Q= 22.5 kW
2. Heat transfer from right left sides glasses.
U glass=1.22 w/m$^2$k
Q=1.22x0.68x15= 24.88 kW
U glass=1.22 w/m$^2$k
Height=50cm=0.5m
Length=136cm=1.36m
Area = 0.5x 1.36 =0.68 m$^2$
Q=1.22x0.68x15= 24.88 kW
3. Heat transfer from front and back side glasses. Q =1.22x0.607x15=22.216 kW
Length =66cm=0.66m
Width =92cm=0.92m
Area=0.66x0.92=0.607m$^2$
Q =1.22x0.607x15=22.216 kW
4. Heat transfer from left & right steel walls. Q=44.53kW
L=221cm=2.21m
H=56cm=0.56m
A=1.237m$^2$
Q=44.53kW
5. Heat transfer from front & back steel walls. Q=18.848 kW
L=0.92m
B=0.56m
A=0.515m$^2$
Q=18.848 kW
6. Heat transfer from bottom steel floor. Q=2.033x1.2x15=36.594 kW
L=2.21m
B=0.92m
A=2.21x0.92=2.033 m$^2$
U=1.2 w/m$^2$
Q=2.033x1.2x15=36.594 kW
7. Total heat transfer= Qa =22.5+24.88+22.216+44.53+18.848+36.59 =169.564kW
Cp =1.005
M=density*V=3.67 kg/m 2x 1.326m 3=4.866 kg
Qb = m*Cp*dt
m = mass of air =4.866kgs
Qb=4.866 x 1.005 x 15= 73.355 kW

**TOTAL HEAT LOAD:**

Qa + Qb=Qt
Qt=169.564+73.355=242.919kW
MASS OF PCM=Qt/latent heat
=242.919 /235 =**1.0337 kg**
Area of top surface= Lx B = 1.36 X 0.92 m$^2$
A=12.512 m$^2$=12,512 cm$^2$ (should be A = 1.2512 m$^2$ = 12,512 cm$^2$)
PCM pouch area =16 *12 =192cm$^2$ (here sticker layer)

Area occupied by sticker layers = 4440 cm$^2$

Remaining area for pouches = 192 * 42 = 8064 cm$^2$

No of PCM pouches = Remaining area for pouches /pouch area

= 8108/192 = 42.

We take PCM for Car liner = 3 kgs to 5kgs.

The following explanations apply to the above calculation. Mass of PCM represents total amount of PCM needed to produce satisfactory results as explained. The sources of heat to the PCM in the pouch come from the cabin and the ambient air around the automobile. Assuming the air in the cabin as a system and writing an energy balance around it, leads us to the following equation

$$Q_{Total} = mc_p \, dT/dt \text{---------------------}(1)$$

$$Q_{Total} = Q_{cabin} + Q_{Environment} \text{-------------}(2)$$

In the Eq. (1), m is the mass of the air in the cabin that for a mid-size car and at 40 °C is equal to 3670 g. The air in the cabin is equal to $Q_{Total}$= 167.6 kJ, The amount of PCM, $mPCM$, required for absorption of that heat is determined by the following equation:

$$Q_{Total} = m_{pcm} \, \lambda_{pcm} \Rightarrow \ m(PCM) = 5000g$$

Through simple calculations the amount of required paraffin PCM to be used inside the car for absorbing the thermal energy in the cabin has been calculated by theoretically required PCM to be 1000grams and by practically required PCM to be about 5000 grams.

Example 2

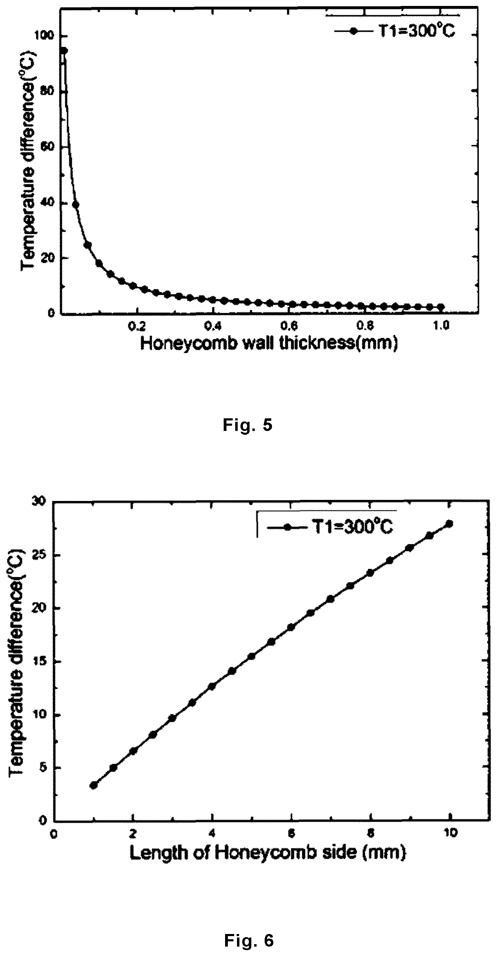

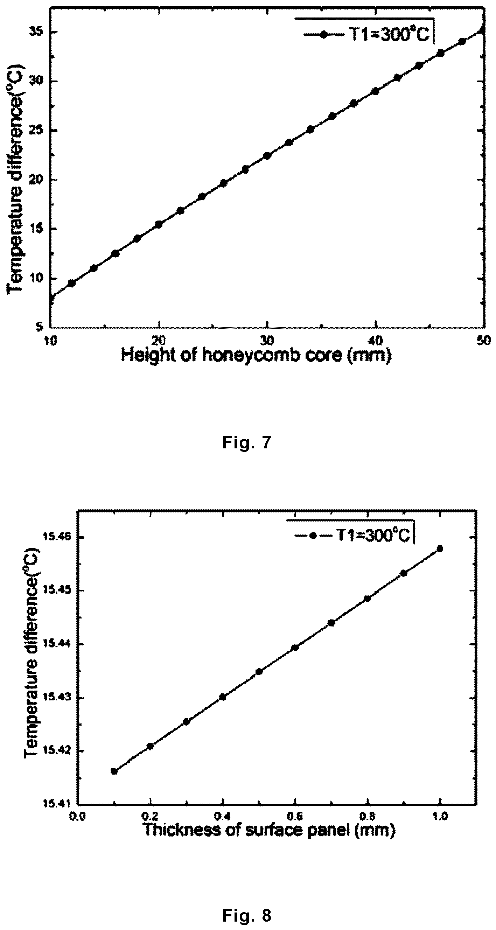

The following represents a heat insulation numerical calculation for honeycomb structure provided with two panels or faces sheets on the face sides. The size of the aluminum alloy honeycomb panels studied is as follows: the thickness of the upper and lower panels is 1 mm, the height of the honeycomb core is 20 mm, the wall thickness of the honeycomb core is 0.1 mm, and the length of the honeycomb unit is 5 mm. The emissivity of the honeycomb upper and lower plates is 0.25. When the upper panel is subjected to a temperature of 300 °C, the size effect of thermal insulation can be shown in Figs. 5-8.

**Reference list**

1    curve of temperature development in a car interior provided with the lining material of the invention

2    curve of temperature development in a car provided with conventional lining material

3    bottom layer having honeycomb structure

4    intermediate layer comprising PCM

5    cover layer, e.g. natural or synthetic leather

**Claims**

**1.** A lining material comprising in this order

> a) a cover layer comprising one or more polymer sheets,
> b) an intermediate layer comprising at least one phase change material, and
> c) a bottom layer having a honeycomb structure.

2. The lining material according to claim 1, **characterized in that** the cover layer comprises one or more PVC sheets.

3. The lining material according to claim 1 or claim 2, **characterized in that** the cover layer is synthetic leather.

4. The lining material according to any one of the preceding claims,
**characterized in that**
the cover layer includes a coating on top of the one or more polymer sheets, preferably PVC sheets.

5. The lining material according to any one of the preceding claims,
**characterized in that**
the at least one phase change material is selected from paraffins, malic acid, fatty acids, esters, lipids, polyethylene glycol, sugar alcohols, inorganic salt hydrates or mixture thereof.

6. The lining material according to any one of the preceding claims,
**characterized in that**
the phase change material in the intermediate layer is encapsulated or microencapsulated in a polymeric or elastomeric material or the phase change material is placed in one or more pouches.

7. The lining material according to any one of the preceding claims,
**characterized in that**
the honeycomb structure of the bottom layer is made of or comprises polymer material, polyester fabric, polyurethane, aramid, carbon fibers, foam, polymer foam, Kevlar fibers, paper, or paperboard.

8. The lining material according to claim 7, **characterized in that** the polymer material of the honeycomb structure is selected from at least one of polyurethane and aramid.

9. The lining material according to any one of the preceding claims,
**characterized in that**
the honeycomb structure is filled with silica aerogel.

10. The lining material according to any one of the preceding claims,
**characterized in that**
the thickness of the cover layer, preferably leather layer, represents 3 to 15% of the total thickness of the lining material,
the thickness of the intermediate layer represents 25 to 45% of the total thickness of the lining material, and
the thickness of the bottom layer represents 45 to 65% of the total thickness of the lining material.

11. The lining material according to any one of the preceding claims,
**characterized in that**
the thickness of the cover layer, preferably leather layer, represents 5 to 10% of the total thickness of the lining material,
the thickness of the intermediate layer represents 30 to 40% of the total thickness of the lining material, and
the thickness of the bottom layer represents 50 to 60% of the total thickness of the lining material.

12. The multilayer lining material according to any one of the preceding claims, **characterized in that** the total thickness of the lining material is in the range of from 0.1 mm to 5 mm, preferably 0.5 mm to 1 mm.

13. An article or a part, provided with the lining material according to any one of claims 1 to 12.

14. The article or part according to claim 13, **characterized in that**
the article or part is vehicle article or part, in particular an automotive article or automotive part, preferably an article or part in an automotive passenger compartment.

15. The article or part according to claim 13 or claim 14, **characterized in that**
the article or part is selected from a car seat, a headliner, an instrument panel, a door panel, a flooring, or a luggage compartment.

external heat

X

3

4

5

Heat from the cabin

**Fig. 1**

**Fig. 2**

Fig. 3

Fig. 4

Fig. 5

Fig. 6

**Fig. 7**

**Fig. 8**

Europäisches
Patentamt

European
Patent Office

Office européen
des brevets

# EUROPEAN SEARCH REPORT

Application Number

EP 20 15 4773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/177168 A1 (THÜRINGISCHES INST FÜR TEXTIL UND KUNSTSTOFF FORSCHUNG E V [DE]) 26 November 2015 (2015-11-26) | 1 | INV. B32B3/12 B32B5/26 |
| A | * claims 1-2 * | 2-6,8-15 | B32B7/027 B32B9/00 |
| Y | WO 2012/046127 A1 (IPLAST HOLDING NV [BE]; STOFFERIS FREDERIC [BE]) 12 April 2012 (2012-04-12) | 1,7 | B32B9/02 B32B9/06 C09K5/06 |
| A | * claims 1,5 * | 2-6,8-15 | F28D20/02 B60R13/00 |
| X | WO 03/057474 A1 (OUTLAST TECHNOLOGIES INC [US]) 17 July 2003 (2003-07-17) | 1,2,5,7, 13,14 | B60R13/08 B60R13/02 |
| A | * paragraphs [0020], [0031] - [0032], [0039], [0045], [0064], [0068], [0080]; claims 1-3,5, 10-11,19-21, 27-29, 34,39; figures 1-6; example 1 * | 6 | B60R13/01 |
| A | WO 02/083440 A2 (PAUSE BARBARA [US]) 24 October 2002 (2002-10-24) * claims * | 1-15 | |
| A | US 5 950 710 A (LIU CHUNYAN [US]) 14 September 1999 (1999-09-14) * claims; figures * | 13-15 | TECHNICAL FIELDS SEARCHED (IPC) B32B G02F C09K |
| A | US 2013/004806 A1 (WANG XIAOHUI JASMINE [CA]) 3 January 2013 (2013-01-03) | 13,14 | F28F F28D B60R |
| X | US 2013/298991 A1 (PARKER JOSEPH B [US] ET AL) 14 November 2013 (2013-11-14) | 1,5,6,13 | F25D |
| Y | * paragraph [0068]; claims; figures | 7 | |
| A | 9,25-29; example 9 * | 2-4, 8-12,14, 15 | |
| A | WO 2016/135601 A1 (MIRIADE S P A [IT]) 1 September 2016 (2016-09-01) * pages 5-6; figures * | 3,5,6,13 | |

-/--

The present search report has been drawn up for all claims

| Place of search | Date of completion of the search | Examiner |
|---|---|---|
| The Hague | 30 April 2020 | Derz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 15 4773

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 5 943 876 A (MEYER BYRON KEITH [US] ET AL) 31 August 1999 (1999-08-31)<br>* paragraphs [0005] - [0008]; claims 1,4,6,10; figures 1,2,4; table 2 * | 1,2,5-7, 9,13<br>3 | |
| Y | US 2002/132091 A1 (WORLEY JAMES BRICE [US]) 19 September 2002 (2002-09-19)<br>* paragraph [0027]; claims 1,7,10,13-14,17,20,26 * | 1,3 | |

-----

-----

TECHNICAL FIELDS
SEARCHED        (IPC)

The present search report has been drawn up for all claims

| Place of search | Date of completion of the search | Examiner |
|---|---|---|
| The Hague | 30 April 2020 | Derz, Thomas |

EPO FORM 1503 03.82 (P04C01)

page 2 of 2

**ANNEX TO THE EUROPEAN SEARCH REPORT**
**ON EUROPEAN PATENT APPLICATION NO.**                    EP 20 15 4773

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2020

| Patent document cited in search report | | Publication date | Patent family member(s) | | Publication date |
|---|---|---|---|---|---|
| WO 2015177168 | A1 | 26-11-2015 | CN | 107075794 A | 18-08-2017 |
| | | | DE | 102015107860 A1 | 03-12-2015 |
| | | | EP | 3145708 A1 | 29-03-2017 |
| | | | JP | 6685238 B2 | 22-04-2020 |
| | | | JP | 2017523061 A | 17-08-2017 |
| | | | KR | 20170008803 A | 24-01-2017 |
| | | | US | 2017087799 A1 | 30-03-2017 |
| | | | WO | 2015177168 A1 | 26-11-2015 |
| WO 2012046127 | A1 | 12-04-2012 | BE | 1019532 A5 | 07-08-2012 |
| | | | EP | 2625032 A1 | 14-08-2013 |
| | | | WO | 2012046127 A1 | 12-04-2012 |
| WO 03057474 | A1 | 17-07-2003 | AT | 465866 T | 15-05-2010 |
| | | | AU | 2002364252 A1 | 24-07-2003 |
| | | | EP | 1472078 A1 | 03-11-2004 |
| | | | TW | I311103 B | 21-06-2009 |
| | | | US | 2003124318 A1 | 03-07-2003 |
| | | | WO | 03057474 A1 | 17-07-2003 |
| WO 02083440 | A2 | 24-10-2002 | AT | 412868 T | 15-11-2008 |
| | | | AU | 2002303328 A1 | 28-10-2002 |
| | | | EP | 1386117 A2 | 04-02-2004 |
| | | | US | 2004154784 A1 | 12-08-2004 |
| | | | WO | 02083440 A2 | 24-10-2002 |
| US 5950710 | A | 14-09-1999 | NONE | | |
| US 2013004806 | A1 | 03-01-2013 | CN | 102856609 A | 02-01-2013 |
| | | | DE | 102012211140 A1 | 03-01-2013 |
| | | | US | 2013004806 A1 | 03-01-2013 |
| US 2013298991 | A1 | 14-11-2013 | NONE | | |
| WO 2016135601 | A1 | 01-09-2016 | CA | 2976862 A1 | 01-09-2016 |
| | | | CN | 107404968 A | 28-11-2017 |
| | | | EP | 3261476 A1 | 03-01-2018 |
| | | | JP | 2018507041 A | 15-03-2018 |
| | | | KR | 20170134974 A | 07-12-2017 |
| | | | RU | 2017133115 A | 25-03-2019 |
| | | | SI | 3261476 T1 | 28-06-2019 |
| | | | US | 2018027921 A1 | 01-02-2018 |
| | | | WO | 2016135601 A1 | 01-09-2016 |
| US 5943876 | A | 31-08-1999 | AU | 3384497 A | 07-01-1998 |
| | | | EP | 0907863 A1 | 14-04-1999 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**                     EP 20 15 4773

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2020

| Patent document cited in search report | Publication date | Patent family member(s) | Publication date |
|---|---|---|---|
|  |  | US 5943876 A | 31-08-1999 |
|  |  | US 5950450 A | 14-09-1999 |
|  |  | US 6192703 B1 | 27-02-2001 |
|  |  | WO 9747918 A1 | 18-12-1997 |
| US 2002132091 A1 | 19-09-2002 | NONE |  |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002083440 A2
- US 5950710 A

- US 8623538 B2